# FASCICULE DE BREVET EUROPEEN

(11) **EP 3 096 941 B1**
(45) Date de publication et mention de la délivrance du brevet: **05.06.2019**
(21) Numéro de dépôt: 15701827.6
(22) Date de dépôt: 12.01.2015
(51) Int. Cl.: B29C 70/38, B29B 11/16, B29B 15/12

(54) **PROCÉDÉ DE RÉALISATION DE PRÉFORMES A PARTIR DE FIBRES AVEC APPLICATION EN LIGNE D'UN LIANT, ET MACHINE CORRESPONDANTE**
VERFAHREN ZUR HERSTELLUNG VON VORFORMLINGEN AUS FASERN MIT INLINE-AUFTRAGUNG EINES BINDEMITTELS UND ZUGEHÖRIGE MASCHINE
METHOD FOR PRODUCING PREFORMS FROM FIBRES WITH IN-LINE APPLICATION OF A BINDER, AND CORRESPONDING MACHINE

(30) Priorité: 24.01.2014 FR 1400164
(43) Date de publication de la demande: 30.11.2016
(73) Titulaire: Coriolis Group, 56530 Quéven (FR)
(72) Inventeur: HAMLYN, Alexander, F-56270 Ploemeur (FI); CAFFIAU, Johann, F-56170 Hennebont (FR); HARDY, Yvan, 56270 Ploemeur (FR)
(86) Numéro de dépôt international: PCT/FR2015/000012
(87) Numéro de publication internationale: WO 2015/110728

(56) Documents cités:
- EP-A2- 2 314 435
- GB-A- 1 596 793

## Description

La présente invention concerne un procédé de réalisation de préformes par drapage sur une surface de drapage de fibres et application en ligne d'un liant. La présente invention concerne également un procédé de réalisation de pièces en matériau composite à partir de telles préformes, et une machine de drapage de fibres pour la réalisation de telles préformes.

Il est connu des machines d'application ou de drapage de fibres pour le drapage automatique sur un outillage de drapage, tel qu'un moule mâle ou femelle, d'une bande large formée d'une ou plusieurs fibres, en particulier des fibres continues plates de type rubans, notamment des fibres de carbone constituées d'une multitude de fils ou filaments de carbone.

Ces machines comprennent classiquement une tête d'application de fibres comportant des moyens de guidage pour guider la ou les fibres vers la surface de drapage. Ces machines comprennent en outre des moyens de stockage de fibres, et des moyens d'acheminement pour acheminer des fibres desdits moyens de stockage vers la tête, et éventuellement un système de déplacement de la tête de drapage. Dans le cas d'une bande formée de plusieurs fibres, appelées également mèches, les moyens de guidage de la tête permettent d'amener vers la surface de drapage les fibres sous la forme d'une bande, dans laquelle les fibres sont disposées parallèlement sensiblement bord à bord, ou avec un espacement défini entre deux fibres adjacentes. Pour un drapage au contact des fibres, ces machines, appelées classiquement machines de placement de fibres, comprennent une tête équipée d'un rouleau de compactage destiné à venir en contact contre la surface de drapage pour appliquer la bande, les moyens de guidage guidant les fibres vers le rouleau sous la forme d'une bande.

Les fibres appliquées peuvent être des fibres pré-imprégnées d'une résine thermoplastique ou thermodurcissable, des fibres sèches, et/ou des fibres sèches munies d'un liant, classiquement appelé « binder », pour conférer un caractère collant aux fibres lors du drapage.

Dans le cas d'un drapage de fibres pré-imprégnées de résine, la préforme, dite pré-imprégnée, obtenue après drapage, est par la suite durcie ou polymérisée par passage dans un four pour obtenir une pièce en matériau composite.

Dans le cas de fibres sèches, avec ou sans liant, de la résine est injectée ou infusée dans la préforme, dite sèche, avant une étape de durcissement. Les préformes sèches avec liant comprennent une faible quantité de liant, généralement inférieure à 5 %, permettant de maintenir la cohésion de la préforme, tout en autorisant son imprégnation ultérieure.

Pour le drapage de fibres sèches munies d'un liant, une première technique consiste à réaliser une enduction du liant en ligne, par exemple au niveau de la tête. Le document brevet WO2006/092514 au nom de la Demanderesse décrit notamment une application de résine entre la sortie des moyens de guidage et le rouleau de compactage au moyen d'une buse à lèvre. La buse à lèvre est alimentée en résine par des moyens de dosage volumétriques comprenant des pompes de dosage formés chacune d'un piston monté coulissant dans un cylindre et déplacé par un actionneur. L'asservissement des actionneurs peut s'avérer complexe pour garantir une précision de dosage correcte, en particulier, dans le cas d'application d'une faible quantité de liant, et/ou pour des vitesses de drapage élevées, pour lesquelles il peut être nécessaire de manoeuvrer le piston en sens inverse en fin de course pour éviter la formation de gouttes de résine en sortie de buse.

Une deuxième solution consiste à mettre en oeuvre des fibres déjà revêtues d'un liant par le fournisseur de matière première. Il est proposé à ce jour de telles fibres, dites poudrées et/ou voilées, conditionnées en bobines, dans lesquelles les liants se présentent sous la forme de poudre et/ou d'un voile sur une surface ou sur chaque surface des fibres. Cette technique a pour inconvénient de mettre en oeuvre un produit coûteux, difficilement utilisable pour certaines applications, notamment dans le domaine automobile.

Le document EP2314435A2 divulgue un système d'application d'un liant sur des fibres sèches comprenant une buse d'application.

Le but de la présente invention est de proposer une solution visant à pallier les inconvénients précités.

A cet effet, la présente invention propose un procédé de réalisation de préformes, par drapage de fibres sur une surface de drapage, comprenant l'acheminement d'au moins une fibre sèche depuis un système de stockage et de distribution jusqu'à une tête de drapage pour draper ladite fibre sur une surface de drapage, caractérisé en ce qu'il comprend, lors du drapage de ladite fibre, l'application d'un liant liquide ou pâteux sur ladite fibre et/ou sur la surface de drapage et/ou des fibres préalablement drapées, ladite application étant réalisée au moyen d'au moins une buse à clapet comprenant une chambre alimentée en liant sous pression via un orifice d'alimentation et munie d'un orifice de décharge et, un clapet monté mobile dans la chambre et actionné par des moyens d'actionnement entre une position fermée pour fermer l'orifice de décharge et une position ouverte pour délivrer le liant sous pression par son orifice de décharge, lesdits moyens d'actionnement étant commandé par un système de commande en fonction de la vitesse de défilement de la fibre pour actionner le clapet entre sa position ouverte et sa position fermée.

Selon l'invention, le drapage est réalisé à partir de fibres sèches et une application de liant est effectuée en ligne au fur et à mesure du drapage au moyen d'une ou plusieurs buses à clapet actionné en fonction de la vitesse en fonction des fibres. Le procédé selon l'invention permet de draper des fibres sèches avec liant en partant d'une matière première peu onéreuse. L'utilisation de buses à clapet permet une application en ligne de liant simple et précise. Les fibres sont continues et comprennent de préférence une multitude de fils ou filaments continus ou non continus, et de préférence sont sous la forme d'un ruban présentant deux faces principales opposées. Différents types de fibres sèches peuvent être mise en oeuvre. A titre d'exemple non limitatif, les fibres sèches utilisées sont des fibres de carbone, des fibres de verre, des fibres d'aramide, des fibres de polyéthylène, et/ou des fibres naturelles, telles que par exemple des fibres de lin. Le liant utilisé peut comprendre une ou plusieurs résines thermodurcissables, par exemple une résine époxyde, polyester, vinylester, phénolique, polyimide, ou bismaléimide, ou une ou plusieurs résines thermoplastiques, par exemple une résine polyamide, polyester thermoplastique, polyéthersulfone, polyétheréthercétone, polyuréthane thermoplastique, époxyde thermoplastique, ou polyoléfine.

Selon une particularité, ledit système de commande contrôle la fréquence de cycle d'ouverture/fermeture du clapet en fonction de la vitesse de défilement de la fibre, chaque cycle d'ouverture/fermeture du clapet comprenant le mouvement du clapet de sa position fermée vers sa position ouverte et le mouvement du clapet de sa position ouverte vers sa position fermée.

Selon un mode de réalisation, la buse à clapet est associée à une buse à lèvre, l'orifice de décharge de la buse à clapet étant connecté au canal d'alimentation de la buse à lèvre, l'application de liant est réalisée par contact de la fibre avec la buse à lèvres. L'utilisation d'une telle buse à lèvre permet d'appliquer du liant sur sensiblement toute la largeur de la fibre et ainsi, d'assurer une adhésion de chaque fibre sur toute sa largeur lors du drapage et d'obtenir une bonne qualité de drapage.

Selon un autre mode de réalisation, l'application du liant est effectuée par projection du liant via l'orifice de décharge, sans contact entre la buse à clapet et la fibre et/ou la surface de drapage. Selon un mode de réalisation, le liant est projeté sur la fibre et est raclé sur la fibre via un système racleur disposé en aval de la buse à clapet.

Selon un mode de réalisation, le procédé comprend le drapage de bandes formées d'une ou plusieurs fibres au moyen d'une tête de drapage, de préférence munie d'un rouleau de compactage pour draper au contact ladite bande contre la surface de drapage, l'application de liant étant effectuée par plusieurs buses à clapet, chaque buse appliquant le liant de manière indépendante pour un groupe de fibres adjacentes ou pour une seule fibre, en particulier sur un groupe de fibres adjacentes ou sur une seule fibre. De préférence, le procédé de drapage est un procédé de placement de bande comprenant le drapage au contact d'une bande large formée d'une fibre large de type ruban, ou un procédé de placement de fibres comprenant le drapage au contact d'une bande large formée de plusieurs fibres en particulier de type ruban. Le procédé comprend alors le drapage de bandes formées d'une ou plusieurs fibres au moyen d'une tête de drapage munie d'un rouleau de compactage pour draper au contact ladite bande contre la surface de drapage, l'application de liant étant effectuée de manière indépendante sur chaque fibre dans le cas du placement de bande formée de plusieurs fibres.

Selon un mode de réalisation, le procédé comprend une opération d'épanouissement de chaque fibre, avant l'application du liant sur la fibre et/ou après l'application du liant sur la fibre, notamment lorsque le liant appliqué ne permet pas de garantir une bonne cohésion en largeur de la fibre.

Selon un mode de réalisation, le procédé comprend l'application de liant sur les deux faces de chaque fibre.

Selon un mode de réalisation, l'application de liant sur la ou les fibres est réalisée au niveau du système de stockage et de distribution des fibres, qui est déporté de la tête de drapage, ledit procédé comprenant l'acheminement de la ou des fibres munies de liant jusqu'à la tête de drapage, le chauffage de la ou des fibres munies de liant, au niveau de la tête de drapage, en particulier en aval des moyens de guidage, pour permettre l'adhésion de ladite fibre à la surface de drapage et/ou à une ou plusieurs fibres munies de liant préalablement drapées sur ladite surface de drapage. L'étape d'application du liant peut être suivie d'une étape de refroidissement de la fibre munie du liant, ceci afin de réduire l'aspect collant de la fibre munie du liant pour son acheminement jusqu'à la tête de drapage, par exemple via des moyens d'acheminement comprenant des tubes flexibles, chaque fibre passant dans le passage interne d'un tube flexible.

Selon un autre mode de réalisation, l'application de liant sur la ou les fibres est réalisée au niveau de la tête de drapage, la ou les buses à clapet étant montées sur la tête pour appliquer le liant sur les fibres juste avant leur contact avec la surface de drapage, notamment en sortie des moyens de guidage, ou pour appliquer le liant sur la surface de drapage, par projection, sans contact entre la buse à clapet et la surface de drapage.

La présente invention a également pour objet un procédé de fabrication de pièces en matériau composite, caractérisé en ce qu'il comprend
- la réalisation d'une préforme par drapage de fibres tel que défini précédemment ;
- une étape d'imprégnation de résine dans la préforme, ladite étape d'imprégnation comprenant l'ajout d'une ou plusieurs résines par infusion ou injection, ou le chauffage de la préforme pour imprégner dans l'ensemble de la préforme la ou les résines formant le liant ; et,
- une étape de durcissement.

Selon un premier mode de réalisation, le procédé selon l'invention est un procédé de réalisation de préformes sèches, comprenant l'application d'un liant sur des fibres sèches et/ou la surface d'application, pour former une préforme sèche comprenant moins de 10% en poids de liant, de préférence moins de 5% en poids de liant, ladite préforme sèche étant par la suite soumise à une opération d'imprégnation d'une résine pour former une pièce composite.

Selon un second mode de réalisation, le procédé est un procédé de réalisation de préformes de type pré-imprégnées, comprenant l'application d'un liant formé d'une ou plusieurs résines pour former une préforme pré-imprégnée comprenant au moins 30% en poids de liant, de préférence au moins de 40% en poids de liant, la préforme pré-imprégnée étant pas la suite soumise à une opération d'imprégnation, pour une imprégnation à coeur du liant dans les fibres, puis une opération de durcissement.

La présente invention a également pour objet une machine de drapage de fibres comprenant une tête de drapage comportant des moyens de guidage pour guider une ou plusieurs fibres vers une surface de drapage, et de préférence un rouleau de compactage destiné à venir en contact contre la surface de drapage, un système de stockage et de distribution pour stocker et distribuer au moins une fibre, des moyens d'acheminement pour acheminer la ou les fibres dudit système de stockage et distribution vers les moyens de guidage de la tête de drapage, et des moyens d'application pour appliquer un liant sur la ou les fibres, caractérisée en ce que les moyens d'application de liant comprennent au moins une buse à clapet comprenant une chambre alimentée en liant sous pression via un orifice d'alimentation et munie d'un orifice de décharge, et un clapet monté mobile dans la chambre et actionné par des moyens d'actionnement entre une position fermée pour fermer l'orifice de décharge et une position ouverte pour délivrer le liant sous pression par son orifice de décharge, lesdits moyens d'actionnement étant commandé par un système de commande en fonction de la vitesse de défilement de la fibre pour actionner le clapet entre sa position ouverte et sa position fermée.

Selon une particularité, ledit système de commande contrôle la fréquence de cycle d'ouverture/fermeture du clapet en fonction de la vitesse de défilement de la fibre.

Selon un mode de réalisation, chaque buse à clapet est associée à une buse à lèvre, l'orifice de décharge de la buse à clapet étant connecté au canal d'alimentation de la buse à lèvre.

Selon un autre mode de réalisation, les moyens d'application comprennent un système racleur disposé en aval de la ou des buses à clapet.

Les moyens d'application de liant peuvent être montés dans le système de stockage et de distribution de fibres ou dans la tête de drapage, tel que décrit précédemment.

Selon un mode de réalisation, la machine comprend un système d'épanouissement et de calibration des fibres disposé en amont et/ou en aval des moyens d'application, de préférence au moins en aval des moyens d'application, l'application de liant permettant avantageusement de figer les dimensions des fibres à draper.

La machine selon l'invention peut être :
- une machine de placement de bande pour l'application au contact d'une bande large formée d'une fibre ou mèche large de type ruban, ou
- une machine de placement de fibres pour l'application au contact d'une bande large formée de plusieurs fibres ou mèches, en particulier de type rubans, ou
- une machine pour l'application sans contact, par exemple une machine d'enroulement filamentaire pour l'application d'une bande formée d'une ou plusieurs fibres, en particulier de type ruban.

Dans le cas d'une machine de placement de bande ou d'une machine de placement de fibres, la tête comprend un rouleau de compactage pour le drapage au contact d'une bande d'une ou plusieurs fibres, ladite machine pouvant comprendre en outre un système de déplacement de la tête de drapage.

Selon un mode de réalisation, le système de stockage et de distribution est disposé à distance de la tête de drapage, par exemple disposé au sol ou est monté sur un des éléments du système de déplacement de la tête. Selon un autre mode de réalisation, le système de stockage et de distribution est intégré à la tête d'application, les moyens d'acheminement sont par exemple formés de poulies acheminant les fibres dudit système de stockage et de distribution jusqu'aux moyens de guidage de la tête, un système de déplacement permettant de déplacer la tête et le système de stockage et de distribution.

L'invention sera mieux comprise, et d'autres buts, détails, caractéristiques et avantages apparaîtront plus clairement au cours de la description explicative détaillée qui va suivre de modes de réalisation particuliers de l'invention, en référence aux dessins schématiques annexés, sur lesquels :
- la figure 1 est une vue schématique de côté d'une machine de drapage de fibres selon un mode de réalisation ;
- la figure 2 est une vue schématique partielle agrandie du cantre de la machine de la figure 1, illustrant les moyens d'application de liant sur les fibres ;
- la figure 3 est une vue partielle schématique de dessus de la figure 2 ;
- la figure 4 est une vue schématique de dessus de fibres après application du liant selon une variante de réalisation ;
- la figure 5 est une vue schématique de côté analogue à celle de la figure 2, illustrant une première variante de réalisation des moyens d'application ;
- les figures 6A, 6B et 6C sont des vues schématiques de dessus de fibres après application du liant illustrant différents type d'application de liant avec les moyens d'application de la figure 5 ;
- la figure 7 est une vue schématique de côté analogue à celle de la figure 2, illustrant une deuxième variante de réalisation des moyens d'application ;
- la figure 8 est une vue schématique de côté d'une tête d'application de fibres équipée de moyens d'application de liant selon un deuxième mode de réalisation de l'invention ;
- la figure 9 est une vue schématique de côté analogue à celle de la figure 9, illustrant une première variante de réalisation ; et
- la figure 10 est vue analogue à celle de la figure 7, illustrant une deuxième variante de réalisation.

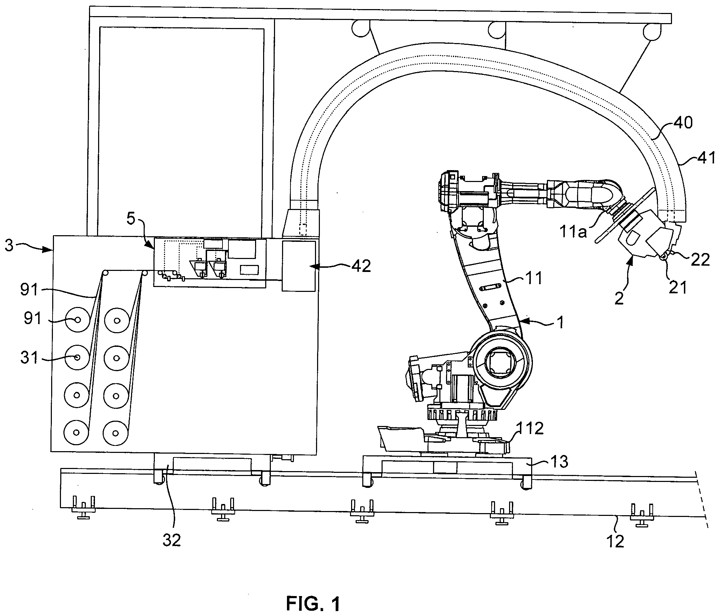

La figure 1 illustre de manière schématique machine de placement de fibres selon l'invention, permettant le drapage au contact sur un moule d'une bande formée de plusieurs fibres. La machine comprend un système de déplacement 1 qui est formé d'un bras poly-articulé 11, du type robot poly-articulé six axes, connu en soi, monté mobile sur un rail linéaire 12 fixé au sol. Le bras poly-articulé 11 est fixé par son embase 112 sur un chariot 13 monté coulissant sur le rail 12. Une tête de placement 2 est montée au poignet d'extrémité 11a du bras poly-articulé. La tête comprend, de manière connue, des moyens de guidage pour guider plusieurs fibres sous la forme d'une bande vers un rouleau de compactage 21, le rouleau de compactage étant apte à venir en contact avec un moule pour appliquer la bande. La tête comprend en outre des moyens de coupe pour couper individuellement chaque fibre, des moyens de réacheminement pour réacheminer chaque fibre venant d'être coupée, afin de pouvoir à tout moment stopper et reprendre l'application d'une fibre, ainsi que choisir la largeur de la bande, et des moyens de blocage afin de bloquer une fibre venant d'être coupée. A titre d'exemple, la machine comprend une tête de drapage telle que décrite dans le document brevet WO2008/132299.

La machine est prévue ici pour le drapage de fibres 91, par exemple de type fibres de carbone, sous forme de ruban, conditionnées en bobines. Le système de stockage et de distribution comprend un cantre 3, pour recevoir des bobines de fibres sèches et délivrer les fibres indépendamment les unes des autres. Chaque bobine est montée sur un mandrin 31, motorisé ou non. A titre d'exemple, chaque mandrin est monté libre en rotation et est équipé d'un système de freinage automatique asservi en boucle fermée en fonction de la tension de la fibre. Le cantre est également monté sur un chariot suiveur 32, disposé sur le rail 12 et relié mécaniquement au chariot 13 portant le robot. Dans le mode de réalisation illustré, la machine et prévue pour le drapage d'une bande de huit fibres 9, le cantre comprenant comprend huit bobines 90 de fibre.

Les moyens d'acheminement pour acheminer les fibres du cantre à la tête de placement sont formés ici de tubes flexibles, tels que décrits par exemple dans le document brevet WO2012/160270. Les tubes sont rassemblés en un faisceau, représenté schématiquement sous la référence 40, et sont placés dans le passage interne d'une gaine 41 flexible, éventuellement refroidie pour refroidir et maintenir les fibres à une température basse, à laquelle les fibres restent peu collantes.

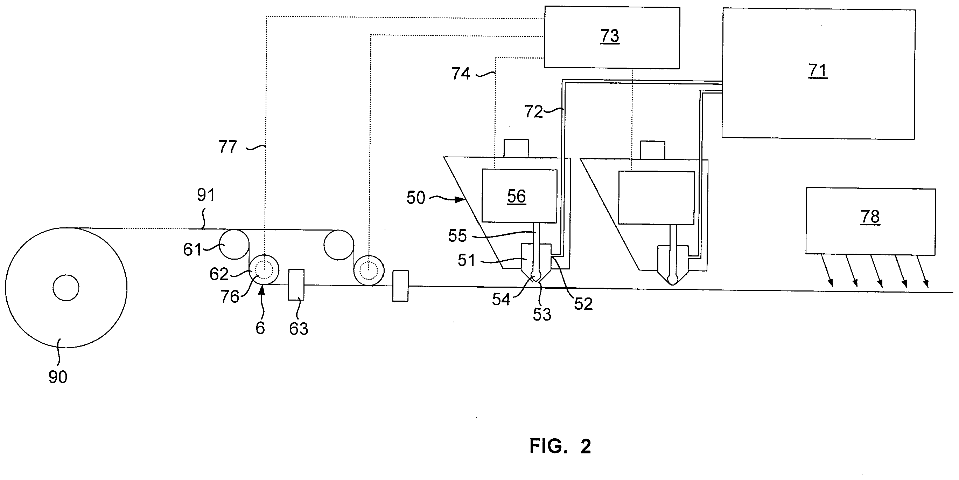

Selon l'invention, la machine est équipée de moyens 5 d'application de liant, disposés ici au niveau du cantre 3, et prévus pour appliquer un liant sous forme liquide ou pâteuse sur une face de chaque fibre sèche. En référence à la figure 2, les moyens d'application comprennent une buse 50 à clapet pour chaque fibre et un système d'alimentation 71 pour alimenter les buses à clapet en résine sous pression. Chaque buse 5 comprend une chambre 51 avec un orifice 52 d'alimentation pour sa connexion au système d'alimentation 71 via une conduite d'alimentation 72, et un orifice 53 de décharge. Un clapet 54 est monté mobile dans la chambre et est déplaçable entre une position fermée dans laquelle le clapet coopère avec la partie inférieure de la chambre, conformée en siège, pour fermer l'orifice de décharge, et une position ouverte dans laquelle le clapet est à distance du siège pour ouvrir l'orifice de décharge. Ce clapet est commandé en ouverture et en fermeture par un système d'actionnement comprenant une tige 55 qui s'étend sensiblement axialement dans la chambre et qui porte à son extrémité libre le clapet 54. Cette tige est apte à être manoeuvrée en translation par des moyens d'actionnement 56 pour déplacer le clapet entre ses deux positions. Ces moyens d'actionnement, par exemple de type électrique ou pneumatique, sont asservis par un système de commande 73, tel qu'illustré par la ligne de commande représentée schématiquement sous la référence 74.

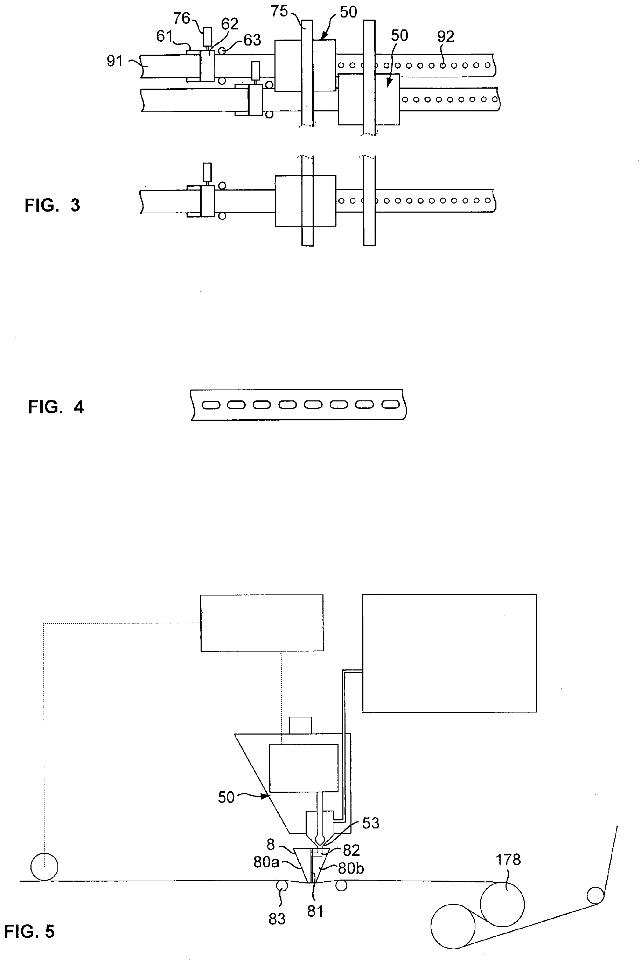

Une buse à clapet est disposée au-dessus de chaque fibre déroulée depuis sa bobine. En référence à la figure 3, les buses sont par exemple disposées en deux rangées, les buses d'une même rangée sont assemblées à une traverse 75 au-dessus des fibres.

Le système d'alimentation 71 en liant sous pression comprend une cuve chauffante dans laquelle le liant est chauffé pour amener le liant à une température à laquelle le liant présente une viscosité appropriée pour son application au moyen de la buse. La cuve est connectée, via une conduite équipée d'une première pompe, à une boucle de circulation, afin d'alimenter ladite boucle de circulation en liant sous pression. La boucle de circulation est équipée d'une deuxième pompe dite pompe de circulation. Les buses sont connectées en parallèle à la boucle de circulation via leur conduite d'alimentation 72. Les conduites et la boucle de circulation ainsi que les buses sont équipées de moyens de chauffage pour maintenir le liant à la même température jusqu'à son application sur les fibres.

En amont des moyens d'application, les fibres sèches passent avantageusement dans un système d'épanouissement et de calibration 6, permettant de calibrer les fibres à une largeur souhaitée avant l'application de liant. Ce système d'épanouissement et de calibration comprend un ensemble de rouleaux fixes et/ou mobiles sur lesquels passent les fibres de manière à obtenir un épanouissement des fibres, ainsi que des systèmes de guidage latéral pour calibrer en largeur les fibres. A titre d'exemple, le système comprend pour chaque fibre deux rouleaux 61, 62 mobiles sur lesquelles passe la fibre. En sortie de ces deux rouleaux, la fibre passe entre deux rouleaux mobiles 63.

Le système de commande 73 est connecté à des capteurs pour recevoir une information représentative de la vitesse de défilement de chaque fibre. Chaque fibre passe par exemple sur un rouleau équipé d'un codeur connecté au système de commande pour communiquer la vitesse de défilement de la fibre. Dans le présent mode de réalisation, le rouleau 62 de chaque système de calibration est équipé d'un codeur 76, chaque codeur est connecté au système de commande via une ligne représentée schématiquement sous la référence 77. Le système de commande contrôle la fréquence de cycle d'ouverture/fermeture du clapet en fonction de la vitesse de défilement de la fibre.

En aval des buses, un système de refroidissement 8 est prévu pour refroidir les fibres enduites de liant, avant leur acheminement vers la tête, à une température à laquelle les fibres sont peu ou pas collantes. Ce système de refroidissement génère par exemple un flux d'air en direction des fibres.

Le cantre peut également être équipé d'un système limiteur de tension 42 (Fig. 1), tel que décrit dans le document brevet WO2006/092514, dans lequel passe les fibres en sortie des moyens d'application, afin de limiter la tension dans la fibre avant leur entrée dans les tubes d'acheminement.

La tête de placement 2 est équipée de moyens de chauffage pour chauffer la fibre munie du liant et ainsi ramollir ledit liant afin de favoriser l'adhésion de la fibre au support de drapage et/ou aux fibres préalablement drapées.

A titre d'exemple, les fibres placées dans le cantre sont des fibres de carbone sèches, constituées d'une multitude de filaments de carbone et d'une faible quantité de résine d'ensimage, de l'ordre de 0,2% en poids. La machine est utilisée pour réaliser une préforme sèche, après application du liant via les buses à clapet, chaque fibre comprend environ 5 % en poids de liant. Le liant comprend par exemple d'une résine époxyde, classiquement appelée résine époxy, éventuellement avec un ou plusieurs adjuvants, notamment des plastifiants.

Tel qu'illustré sur la figure 3, les buses sont réglées pour appliquer des points ou gouttes de liant 92. Chaque cycle d'ouverture/fermeture du clapet 54 comprend le mouvement du clapet de sa position fermée vers sa position ouverte et le mouvement du clapet de sa position ouverte vers sa position fermée. Entre ces deux mouvements, le clapet reste en position ouverte pendant un temps d'ouverture déterminé. La quantité de liant déposée est définie en déterminant le temps d'ouverture, la pression de liant dans la chambre et la viscosité du liant. La pression de liant dans la chambre est définie en réglant la première pompe du système d'alimentation. La viscosité du liant est définie en réglant la température du liant dans les moyens d'application. A chaque cycle d'ouverture/fermeture, la buse délivre une quantité de liant définie, et le système de commande contrôle la fréquence de cycle en fonction de la vitesse de défilement de la fibre. L'application du liant se fait sans contact entre la buse et la fibre, le liant est projeté sous forme de gouttes sur la fibre à chaque ouverture de la buse.

Après réalisation d'une préforme sèche par drapage de plusieurs plis, la préforme sèche peut être soumise à une opération d'infusion ou d'injection de résine puis une opération de durcissement pour obtenir une pièce composite. La résine d'infusion ou d'injection est analogue à celle utilisée comme liant, le durcisseur de cette résine servant au durcissement de la résine utilisée comme liant.

Une préforme sous forme de plaque aux dimensions souhaitées peut être obtenue par drapage de plusieurs plis. Le liant appliqué aux fibres autorise une déformation de la préforme. Celle-ci peut être placée dans un moule correspondant à la forme finale de la pièce composite souhaitée dans lequel sera réalisé l'opération d'imprégnation de résine par injection ou infusion.

Selon un autre exemple, la machine est utilisée pour la réalisation de préformes pré-imprégnées comprenant au moins 40% en poids de résine. La préforme obtenue après drapage peut ensuite être soumise à une opération de chauffage et de mise en pression pour imprégner la résine de manière homogène dans l'ensemble de la préforme, puis une opération de consolidation pour obtenir une pièce composite.

En variante, les buses sont réglées pour appliquer des traits ou cordons de liant, tel qu'illustré à la figure 4. Ces cordons peuvent être obtenus en augmentant le temps d'ouverture des clapets à chaque cycle.

La figure 5 illustre une variante de réalisation, dans laquelle chaque buse à clapet 50 est associée à une buse à lèvre 8, la buse à clapet alimentant la buse à lèvre pour effectuer une application au contact du liant sur la fibre. La buse à lèvre 8 comprend, de manière connue en soi, deux plaques ou barres 80a, 80b enserrant un clinquant 81 muni d'une fente. L'une 80b des deux barres est munie d'un canal d'alimentation 82, débouchant sur ladite fente et connecté à l'orifice de décharge 53 de la buse à clapet. La fibre passe avantageusement sur deux rouleaux 83 disposés de part et d'autre de la buse à lèvre, pour être amenée en appui contre la buse à lèvre, en particulier contre les bords inférieurs des barres formant lèvres. La buse à clapet fonctionne tel que décrit précédemment, et alimente en résine la buse à lèvre lorsque son clapet est en position ouverte. La buse à lèvre permet d'étaler sur la fibre le liant délivré par la buse à clapet, sous la forme d'une couche ou film. La largeur de la couche est définie par la largeur de la fente du clinquant. Dans cette variante de réalisation, le système de refroidissement comprend des rouleaux 178 sur lesquels passent les fibres en sortie des buses à lèvre. Ces rouleaux sont refroidis par des moyens appropriés tel qu'un système de circuit de refroidissement dans lequel circule un fluide réfrigérant.

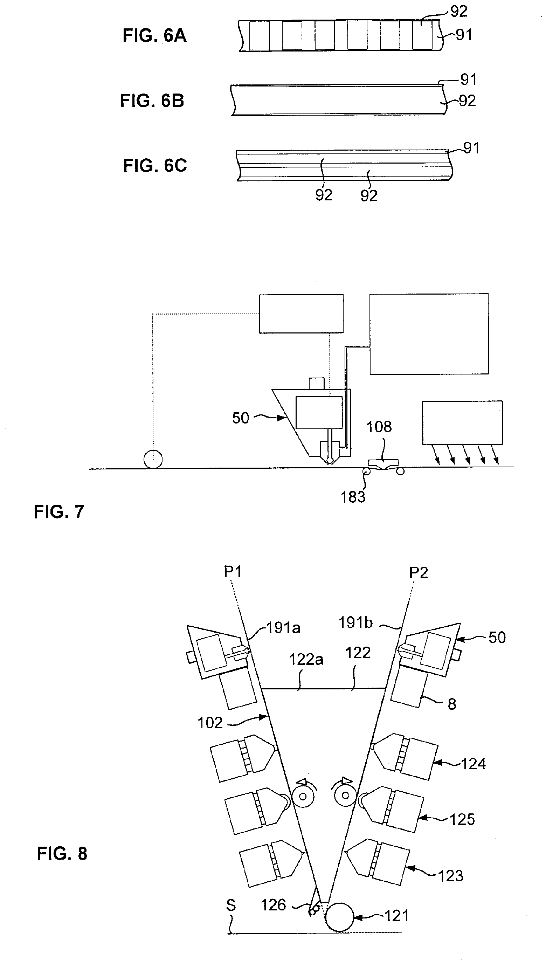

A titre d'exemple, la fente du clinquant présente une largeur sensiblement égale à la largeur de la fibre. La buse à clapet est pilotée de manière à former une couche discontinue, tel qu'illustré à la figure 6A, la fibre présentant longitudinalement une alternance de zones encollées et de zones non encollées, ou à former une couche continue de liant, tel qu'illustré à la figure 6B. Dans ce dernier cas, les buses sont avantageusement réglées de manière à être maintenues en position ouverte lorsque la tête a atteint sa vitesse de drapage maximale, par exemple 1m.s⁻¹, et la fréquence de cycle d'ouverture /fermeture varie uniquement lors des phases d'accélération et de décélération.

La figure 6C illustre une variante de réalisation dans laquelle la couche continue appliquée comprend deux bandes longitudinales décalées transversalement l'une de l'autre. Une telle couche est obtenue au moyen d'un clinquant présentant deux fentes décalées l'une de l'autre. Les deux fentes sont alimentées en liant par l'intermédiaire d'une gorge ménagée sur la face interne de contact de la barre 80b sur laquelle débouche le canal d'alimentation 82 de la buse à lèvre.

Selon une variante de réalisation, les moyens d'application comprennent une seule buse à lèvre associée à plusieurs buses à clapet, par exemple une buse à lèvres pour chaque rangée précitée de buses à clapet. Chaque buse à lèvre comprenant alors un clinquant muni de plusieurs fentes, chaque fente étant connectée via une conduite d'alimentation à un orifice de décharge d'une buse à clapet.

La figure 7 illustre une variante de réalisation dans laquelle chaque buse à clapet 50 est associée à un système racleur 108, disposé en aval de la buse à lèvre par rapport au sens de défilement de la fibre, pour étaler sur la face de la fibre les points ou cordons de liant déposés par la buse à clapet. La fibre passe avantageusement sur deux rouleaux 183 disposés de part et d'autre du système racleur, pour être amenée contre le système racleur.

Selon une variante de réalisation, les moyens d'application permettent d'appliquer le liant sur les deux faces de chaque fibre et comprennent par exemple une buse à clapet de part et d'autre de chaque fibre, chaque buse à clapet étant éventuellement associée à une buse à lèvre.

Selon un autre mode de réalisation les moyens d'application de liant ne sont pas disposés dans le cantre mais au niveau de la tête de placement de fibres, tel qu'illustré à la figure 8. La tête de placement 102 comprend un rouleau de compactage 121, un système de guidage 122 permettant de guider les fibres entrant dans la tête en direction du rouleau sous la forme de deux nappes de fibres 191a 191b disposés selon deux plans P1, P2 de guidage, pour former une bande de fibres dans laquelle les fibres sont disposées sensiblement bord à bord. Ce système de guidage comprend par exemple des canaux de guidage, dans lesquels passent les fibres, formés à l'interface d'assemblage d'une pièce centrale 122a, en forme de coin, et de deux plaques latérales (non représentées). Le système de guidage est monté sur une structure support (non représentée) par laquelle la tête est assemblée au poignet du robot décrit précédemment. En variante, la tête est fixe et la surface de drapage du moule est apte à être déplacé par rapport à la tête pour effectuer les opérations de drapage. La tête comprend en outre, de part et d'autre du système de guidage, des moyens de coupe 123, des moyens de blocage 124 et des moyens de réacheminement 125.

La tête est équipée de buses à clapet 50 pour appliquer du liant sur les fibres en amont du système de guidage. La tête comprend par exemple une buse à clapet par fibre permettant l'application de liant par point ou cordons tel que décrit précédemment. Comme précédemment, les buses à clapet sont pilotées en fonction de la vitesse d'avancement des fibres. En variante, chaque buse à clapet peut être équipée d'une buse à lèvre comme décrit précédemment. Des systèmes de refroidissement 8 sont avantageusement disposés en aval des buses pour permettre un refroidissement du liant avant le passage des fibres dans le système de guidage 122. La tête de placement 102 comprend en outre des moyens de chauffage, formés par exemple d'un système de chauffe 126 de type lampe infrarouge, pour chauffer la fibre munie du liant en sortie du système de guidage, ainsi que la surface de drapage et/ou les fibres préalablement drapées.

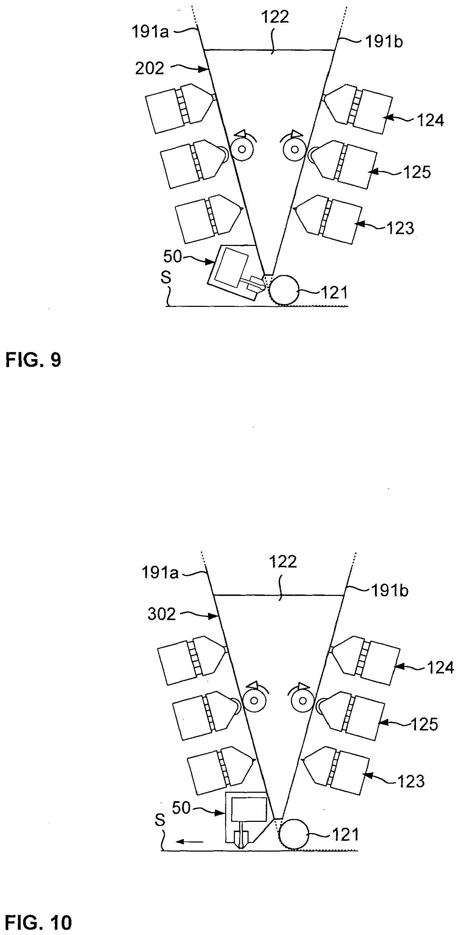

La figure 9 illustre une variante de réalisation dans laquelle la tête 202 est équipée de buses à clapet aptes à appliquer le liant sur les fibres en sortie du système de guidage 122, la tête comprenant une buse à clapet par fibre. En variante, chaque buse à clapet peut être équipée d'une buse à lèvre comme décrit précédemment.

La figure 10 illustre une variante de réalisation dans laquelle la tête 302 est équipée de buses à clapet aptes à appliquer le liant, en amont du rouleau, sur la surface de drapage ou sur des fibres préalablement drapées. La tête comprend une buse à clapet par fibre, pilotée en fonction de la vitesse de défilement de la fibre.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention définie par les revendications.

## Revendications

1. Procédé de réalisation de préformes, par drapage de fibres sur une surface de drapage, comprenant l'acheminement d'au moins une fibre sèche (91) depuis un système de stockage et de distribution (3) jusqu'à une tête de drapage (2, 102, 202, 302) pour draper ladite fibre sur une surface de drapage, le procédé comprenant lors du drapage de ladite fibre, l'application d'un liant (92) liquide ou pâteux sur ladite fibre et/ou sur la surface de drapage et/ou des fibres préalablement drapées, **caractérisé en ce que** ladite application est réalisée au moyen d'au moins une buse à clapet (50) comprenant une chambre (51) alimentée en liant sous pression via un orifice d'alimentation (52) et munie d'un orifice de décharge (53), et un clapet (54) monté mobile dans la chambre et actionné par des moyens d'actionnement (55, 56) entre une position fermée pour fermer l'orifice de décharge et une position ouverte pour délivrer le liant sous pression par son orifice de décharge, lesdits moyens d'actionnement étant commandés par un système de commande (73) en fonction de la vitesse de défilement de la fibre pour actionner le clapet entre sa position ouverte et sa position fermée.

2. Procédé selon la revendication 1, **caractérisé en ce que** ledit système de commande (73) contrôle la fréquence de cycle d'ouverture/fermeture du clapet (54) en fonction de la vitesse de défilement de la fibre.

3. Procédé selon la revendication 1 ou 2, **caractérisé en ce que** la buse à clapet (50) est associée à une buse à lèvre (8), l'orifice de décharge (53) de la buse à clapet étant connecté au canal d'alimentation (82) de la buse à lèvre, l'application de liant est réalisée par contact de la fibre avec la buse à lèvres.

4. Procédé selon la revendication 1 ou 2, **caractérisé en ce que** l'application du liant est effectuée par projection du liant via l'orifice de décharge.

5. Procédé selon la revendication 4, **caractérisé en ce que** le liant est projeté sur la fibre et est raclé sur la fibre via un système racleur (108) disposé en aval de la buse à clapet.

6. Procédé selon l'une des revendications 1 à 5, **caractérisé en ce qu'**il comprend l'épanouissement de chaque fibre, avant l'application du liant sur la fibre et/ou après l'application du liant sur la fibre.

7. Procédé selon l'une des revendications 1 à 6, **caractérisé en ce qu'**il comprend l'application de liant sur les deux faces de chaque fibre.

8. Procédé selon l'une des revendications 1 à 7, **caractérisé en ce qu'**il comprend le drapage de bandes formées d'une ou plusieurs fibres au moyen d'une tête (2) de drapage, l'application de liant étant effectuée par plusieurs buses à clapet, chaque buse appliquant le liant de manière indépendante pour un groupe de fibres adjacentes ou pour une seule fibre.

9. Procédé selon l'une des revendications 1 à 8, **caractérisé en ce que** l'application de liant sur la ou les fibres est réalisée au niveau du système de stockage et de distribution des fibres, ledit procédé comprenant l'acheminement de la ou des fibres munies de liant jusqu'à la tête de drapage, et le chauffage de la ou des fibres munies de liant pour permettre l'adhésion de ladite fibre à la surface de drapage et/ou à une ou plusieurs fibres munies de liant préalablement drapées sur ladite surface de drapage.

10. Procédé selon l'une des revendications 1 à 8, **caractérisé en ce que** l'application de liant sur la ou les fibres est réalisée au niveau de la tête de drapage (102, 202, 302), la ou les buses à clapet (50) étant montées sur la tête pour appliquer le liant sur les fibres juste avant leur contact avec la surface de drapage, ou pour appliquer le liant sur la surface de drapage, par projection.

11. Procédé de fabrication de pièces en matériau composite, **caractérisé en ce qu'**il comprend
- la réalisation d'une préforme par drapage de fibres selon l'une des revendications 1 à 10;
- une étape d'imprégnation de résine dans la préforme, ladite étape d'imprégnation comprenant l'ajout d'une ou plusieurs résines par infusion ou injection, ou le chauffage de la préforme pour imprégner dans l'ensemble de la préforme la ou les résines formant le liant ; et,
- une étape de durcissement.

12. Machine de drapage de fibres comprenant
- une tête (2) de drapage comportant des moyens de guidage pour guider une ou plusieurs fibres vers une surface de drapage,
- un système (3) de stockage et de distribution pour stocker et distribuer au moins une fibre (9),
- des moyens d'acheminement (40) pour acheminer la ou les fibres dudit système de stockage et distribution vers les moyens de guidage de la tête de drapage, et
- des moyens d'application (5) pour appliquer un liant sur la ou les fibres
**caractérisée en ce que** les moyens d'application de liant comprennent au moins une buse à clapet (50) comprenant une chambre (51) alimentée en liant sous pression via un orifice d'alimentation (52) et munie d'un orifice de décharge (53) et un clapet (54) monté mobile dans la chambre et actionné par des moyens d'actionnement (55, 56) entre une position fermée pour fermer l'orifice de décharge et une position ouverte pour délivrer le liant sous pression par son orifice de décharge, lesdits moyens d'actionnement étant commandés par un système de commande (73) en fonction de la vitesse de défilement de la fibre pour actionner le clapet entre sa position ouverte et sa position fermée.

13. Machine selon la revendication 12, **caractérisée en ce que** ledit système de commande (73) contrôle la fréquence de cycle d'ouverture/fermeture du clapet (54) en fonction de la vitesse de défilement de la fibre.

14. Machine selon la revendication 12 ou 13, **caractérisée en ce que** chaque buse à clapet (50) est associée à une buse à lèvre (8), l'orifice de décharge (53) de la buse à clapet étant connecté au canal d'alimentation (82) de la buse à lèvre.

## Patentansprüche

1. Verfahren zur Herstellung von Vorformlingen durch Drapieren von Fasern auf einer Drapier-Oberfläche, umfassend die Beförderung mindestens einer trockenen Faser (91) aus einem Lager- und Verteilsystem (3) bis zu einem Drapier-Kopf (2, 102, 202, 302) zum Drapieren der Faser auf einer Drapier-Oberfläche, wobei das Verfahren beim Drapieren der Faser das Auftragen eines flüssigen oder pastösen Bindemittels (92) auf die Faser und/oder auf die Drapier-Oberfläche und/oder zuvor drapierte Fasern umfasst, **dadurch gekennzeichnet, dass** das Auftragen mittels mindestens einer Klappendüse (50) realisiert wird, die eine Kammer (51) umfasst, die über eine Versorgungsöffnung (52) mit unter Druck stehendem Bindemittel versorgt wird, und mit einer Entladeöffnung (53) versehen ist, und eine Klappe (54), die beweglich in der Kammer montiert ist und durch Betätigungsmittel (55, 56) zwischen einer geschlossenen Position zum Schließen der Entladeöffnung und einer offenen Position zum Abgeben des unter Druck stehenden Bindemittels durch ihre Entladeöffnung betätigt wird, wobei die Betätigungsmittel durch ein Steuersystem (73) in Abhängigkeit von der Durchlaufgeschwindigkeit der Faser gesteuert werden, um die Klappe zwischen ihrer offenen und ihrer geschlossenen Position zu betätigen.

2. Verfahren nach Anspruch 1, **dadurch gekennzeichnet, dass** das Steuersystem (73) die Öffnungs-/Schließzyklusfrequenz der Klappe (54) in Abhängigkeit von der Durchlaufgeschwindigkeit der Faser kontrolliert.

3. Verfahren nach Anspruch 1 oder 2, **dadurch gekennzeichnet, dass** die Klappendüse (50) einer Lippendüse (8) zugewiesen ist, wobei die Entladeöffnung (53) der Klappendüse an den Versorgungskanal (82) der Lippendüse angeschlossen ist, wobei der Bindemittelauftrag durch Kontakt der Faser mit der Lippendüse realisiert wird.

4. Verfahren nach Anspruch 1 oder 2, **dadurch gekennzeichnet, dass** das Auftragen des Bindemittels durch Projizieren des Bindemittels über die Entladeöffnung vorgenommen wird.

5. Verfahren nach Anspruch 4, **dadurch gekennzeichnet, dass** das Bindemittel auf die Faser projiziert wird und auf der Faser über ein Schabersystem (108) geschabt wird, das stromabwärts der Klappendüse angeordnet ist.

6. Verfahren nach einem der Ansprüche 1 bis 5, **dadurch gekennzeichnet, dass** es die Entfaltung einer jeden Faser vor dem Auftragen des Bindemittels auf der Faser und/oder nach dem Auftragen des Bindemittels auf der Faser umfasst.

7. Verfahren nach einem der Ansprüche 1 bis 6, **dadurch gekennzeichnet, dass** es den Bindemittelauftrag auf die beiden Seiten einer jeden Faser umfasst.

8. Verfahren nach einem der Ansprüche 1 bis 7, **dadurch gekennzeichnet, dass** es das Drapieren von Bändern, die aus einer oder mehreren Fasern gebildet werden, mittels eines Drapier-Kopfes (2) umfasst, wobei der Bindemittelauftrag durch mehrere Klappendüsen vorgenommen wird, wobei jede Düse das Bindemittel unabhängig für eine Gruppe von benachbarten Fasern oder für eine einzige Faser aufträgt.

9. Verfahren nach einem der Ansprüche 1 bis 8, **dadurch gekennzeichnet, dass** der Bindemittelauftrag auf die Faser(n) im Bereich des Lager- und Verteilsystems der Fasern realisiert wird, wobei das Verfahren die Beförderung der mit Bindemittel versehenen Faser(n) bis zum Drapier-Kopf umfasst, und das Erwärmen der mit Bindemittel versehenen Faser(n), um das Anhaften der Faser auf der Drapier-Oberfläche und/oder auf einer oder mehreren zuvor drapierten mit Bindemittel versehenen Fasern auf der Drapier-Oberfläche zu ermöglichen.

10. Verfahren nach einem der Ansprüche 1 bis 8, **dadurch gekennzeichnet, dass** der Bindemittelauftrag auf die Faser(n) im Bereich des Drapier-Kopfes (102, 202, 302) realisiert wird, wobei die Klappendüse(n) (50) auf dem Kopf montiert sind, um das Bindemittel unmittelbar vor deren Kontakt mit der Drapier-Oberfläche auf die Fasern aufzutragen, oder um das Bindemittel durch Projizieren auf die Drapier-Oberfläche aufzutragen.

11. Verfahren zur Fertigung von Teilen aus Verbundmaterial, **dadurch gekennzeichnet, dass** es umfasst
- Herstellen eines Vorformlings durch Drapieren von Fasern nach einem der Ansprüche 1 bis 10;
- einen Schritt des Imprägnierens von Harz in dem Vorformling, wobei der Schritt des Imprägnierens das Beigeben eines oder mehrerer Harze durch Infusion oder Injektion, oder das Erwärmen des Vorformlings zum Imprägnieren des oder der Harze, die das Bindemittel bilden, in der Gesamtheit des Vorformlings umfasst; und,
- einen Schritt des Härtens.

12. Maschine zum Drapieren von Fasern, umfassend
- einen Drapier-Kopf (2) Führungsmittel zum Führen einer oder mehrerer Fasern zu einer Drapier-Oberfläche beinhaltend,
- ein Lager- und Verteilsystem (3) zum Lagern und Verteilen mindestens einer Faser (9),
- Beförderungsmittel (40) zum Befördern der Faser(n) von dem Lager- und Verteilsystem zu den Führungsmitteln des Drapier-Kopfes, und
- Auftragungsmittel (5) zum Auftragen eines Bindemittels auf die Faser(n)
**dadurch gekennzeichnet, dass** die Bindemittelauftragungsmittel mindestens eine Klappendüse (50) umfassen, die eine Kammer (51) umfasst, die über eine Versorgungsöffnung (52) mit unter Druck stehendem Bindemittel versorgt wird, und mit einer Entladeöffnung (53) versehen ist, und eine Klappe (54), die beweglich in der Kammer montiert ist und durch Betätigungsmittel (55, 56) zwischen einer geschlossenen Position zum Schließen der Entladeöffnung und einer offenen Position zum Abgeben des unter Druck stehenden Bindemittels durch ihre Entladeöffnung betätigt wird, wobei die Betätigungsmittel durch ein Steuersystem (73) in Abhängigkeit von der Durchlaufgeschwindigkeit der Faser gesteuert werden, um die Klappe zwischen ihrer offenen und ihrer geschlossenen Position zu betätigen.

13. Maschine nach Anspruch 12, **dadurch gekennzeichnet, dass** das Steuersystem (73) die Öffnungs-/Schließzyklusfrequenz der Klappe (54) in Abhängigkeit von der Durchlaufgeschwindigkeit der Faser kontrolliert.

14. Maschine nach Anspruch 12 oder 13, **dadurch gekennzeichnet, dass** jede Klappendüse (50) einer Lippendüse (8) zugewiesen ist, wobei die Entladeöffnung (53) der Klappendüse an den Versorgungskanal (82) der Lippendüse angeschlossen ist.

## Claims

1. Method for producing preforms by laying up fibres on a layup surface, comprising conveying at least one dry fibre (91) from a storage and distribution system (3) to a layup head (2, 102, 202, 302) to layup said fibre on a layup surface, the method comprising during the layup of said fibre, the application of a liquid or pasty binder (92) on said fibre and/or on the layup surface and/or pre-laid up fibres, **characterized in that** said application is carried out by means of at least one valve nozzle (50) comprising a chamber (51) supplied with binder under pressure via a supply orifice (52) and provided with a discharge orifice (53), and a valve (54) mounted movably in the chamber and operated by actuating means (55, 56) between a closed position to close the discharge port and an open position to deliver the binder under pressure through its discharge port, said actuating means being controlled by a control system (73) according to the running speed of the fibre to actuate the valve between its open position and its closed position.

2. Method according to claim 1, **characterized in that** said control system (73) controls the frequency of the opening/closing cycle of the valve (54) according to the running speed of the fibre.

3. Method according to claim 1 or 2, **characterized in that** the valve nozzle (50) is associated with a lip nozzle (8), the discharge orifice (53) of the valve nozzle being connected to the supply channel (82) of the lip nozzle, the application of binder is carried out by contact of the fibre with the lip nozzle.

4. Method according to claim 1 or 2, **characterized in that** the application of binder is carried out by spraying binder through the discharge orifice.

5. Method according to claim 4, **characterized in that** the binder is sprayed onto the fibre and scraped onto the fibre via a scraper system (108) arranged downstream of the valve nozzle.

6. Method according to one of claims 1 to 5, **characterized in that** it comprises the spreading of each fibre, before the application of the binder to the fibre and/or after the application of the binder to the fibre.

7. Method according to one of claims 1 to 6, **characterized in that** it comprises the application of binder to both sides of each fibre.

8. Method according to one of claims 1 to 7, **characterized in that** it comprises the layup of strips formed of one or more fibres by means of a layup head (2), the application of binder being carried out by several valve nozzles, each nozzle applying the binder independently for a group of adjacent fibres or for a single fibre.

9. Method according to one of claims 1 to 8, **characterized in that** the application of binder to the fibre(s) is carried out at the level of the fibre storage and distribution system, said method comprising conveying the fibre(s) provided with binder to the layup head, and heating the fibre(s) provided binder to allow adhesion of said fibre to the layup surface and/or one or more fibres provided with binder previously laid up on said layup surface.

10. Method according to one of claims 1 to 8, **characterized in that** the application of binder to the fibre(s) is carried out at the layup head (102, 202, 302), the valve nozzle(s) (50) being mounted on the head to apply the binder to the fibres immediately before their contact with the layup surface, or to apply the binder to the layup surface by spraying.

11. Method for the manufacture of composite material parts, **characterized in that** it comprises
- the production of a preform by laying up fibres according to one of claims 1 to 10;
- a step of impregnating resin into the preform, said impregnation step comprising adding one or more resins by infusion or injection, or heating the preform to impregnate the resin or resins forming the binder throughout the preform; and,
- a curing step.

12. Fibre layup machine comprising
- a layup head (2) comprising guiding means for guiding one or more fibres towards a layup surface,
- a storage and distribution system (3) for storing and distributing at least one fibre (9),
- conveying means (40) for conveying the fibre or fibres from said storage and distribution system to the guiding means of the layup head, and
- application means (5) for applying a binder to the fibre(s)
**characterized in that** the binder application means comprises at least one valve nozzle (50) comprising a chamber (51) supplied with binder under pressure via a supply orifice (52) and provided with a discharge orifice (53) and a valve (54) mounted movably in the chamber and operated by actuating means (55, 56) between a closed position to close the discharge port and an open position to deliver the binder under pressure through its discharge port, said actuating means being controlled by a control system (73) according to the running speed of the fibre to actuate the valve between its open position and its closed position.

13. Machine according to claim 12, **characterized in that** said control system (73) controls the frequency of the opening/closing cycle of the valve (54) as a function of the running speed of the fibre.

14. Machine according to claim 12 or 13, **characterized in that** each valve nozzle (50) is associated with a lip nozzle (8), the discharge orifice (53) of the valve nozzle being connected to the supply channel (82) of the lip nozzle.
